# EUROPÄISCHE PATENTSCHRIFT

(11) **EP 2 811 147 B1**
(45) Veröffentlichungstag und Bekanntmachung des Hinweises auf die Patenterteilung: **17.01.2018**
(21) Anmeldenummer: 14170760.4
(22) Anmeldetag: 02.06.2014
(51) Int. Cl.: F02M 37/22, B01D 35/18, B01D 35/00

(54) **Filterelement und Heizmantel eines Filterelements**
Filter element and heating jacket of a filter element
Élément de filtre et chemise de chauffage d'un élément de filtre

(30) Priorität: 03.06.2013 DE 102013009200
(43) Veröffentlichungstag der Anmeldung: 10.12.2014
(73) Patentinhaber: Sefar AG, 9140 Heiden (CH)
(72) Erfinder: Klein, Martin, 71634 Ludwigsburg (DE); Brunst, Ralf, 71254 Ditzingen (DE); Fischer, Claus, 70736 Fellbach (DE); Labarta, Armando, 71638 Ludwigsburg (DE); Locher, Ivo, 6300 Zug (CH); Hegelbach, Reto, 9010 St. Gallen (DE)
(74) Vertreter: Wunderlich, Rainer

(56) Entgegenhaltungen:
- DE-A1- 3 624 276
- DE-A1-102011 088 879
- DE-C1- 10 222 946
- DE-U1- 7 729 511
- DE-U1-202007 010 602
- GB-A- 1 078 683
- JP-A- S5 893 953
- US-A1- 2010 181 238

## Beschreibung

### Technisches Gebiet

Die Erfindung betrifft ein Filterelement eines Filters für Fluid, insbesondere Kraftstoff, Öl, Wasser, Harnstoff oder Luft, insbesondere einer Brennkraftmaschine, insbesondere eines Kraftfahrzeugs, mit einem als Filtermediumhohlkörper gestalteten, wenigstens bezüglich einer Elementachse umfangsmäßig geschlossenen Filtermedium, mit einem elektrischen Heizmantel, welcher die Elementachse wenigstens teilumfänglich und wenigstens teilaxial umgibt und der eine Mehrzahl von parallel geschalteten elektrischen Heizleitern aufweist, und mit einer elektrischen Anschlusseinrichtung, die elektrisch mit den Heizleitern verbunden ist und die mit elektrischen Leitungen zur Versorgung des elektrischen Heizmantels verbunden werden kann, wobei die Anschlusseinrichtung wenigstens ein längliches Kontaktelement aufweist, mit dem wenigstens mehrere der Heizleiter über jeweils wenigstens eine Anschlussstelle wenigstens elektrisch verbunden sind.

Ferner betrifft die Erfindung einen Heizmantel eines Filterelements eines Filters für Fluid, insbesondere Kraftstoff, Öl, Wasser, Harnstoff oder Luft, insbesondere einer Brennkraftmaschine, insbesondere eines Kraftfahrzeugs, welcher bezüglich eines als Filtermediumhohlkörper gestalteten, wenigstens bezüglich einer Elementachse umfangsmäßig geschlossenen Filtermediums so angeordnet werden kann, dass er die Elementachse wenigstens teilumfänglich und wenigstens teilaxial umgibt und der eine Mehrzahl von parallel geschalteten elektrischen Heizleitern aufweist und der wenigstens einen mit den Heizleitern elektrisch verbundenen Teil einer elektrischen Anschlusseinrichtung aufweist, die mit elektrischen Leitungen zur Versorgung des elektrischen Heizmantels verbunden werden kann, wobei der wenigstens eine Teil der Anschlusseinrichtung wenigstens ein längliches elektrisches Kontaktelement aufweist, mit dem wenigstens mehrere der Heizleiter über jeweils wenigstens eine Anschlussstelle wenigstens elektrisch verbunden sind,.

### Stand der Technik

Aus der DE 20 2007 010 602 U1 ist ein Filterelement insbesondere eines Kraftstofffilters für Kraftfahrzeuge bekannt, der zum austauschbaren Einsatz in einem Filtergehäuse vorgesehen ist. Das Filterelement umfasst einen zur radialen Durchströmung vorgesehenen Filterkörper mit einem Filtermaterial. Ein Heizelement für den Kraftstoff ist au-ßenseitig und flächig um das Filtermaterial herumgeführt. Das Heizelement umfasst einen elektrischen Heizleiterdraht und ist zu einem zylindrischen Wickelkörper geformt. Zwei Enden des Heizleiterdrahtes sind für eine elektrische Kontaktierung radial nach innen gebogen. Ein aus Kunststoff spritzgegossenes Gehäuse bildet zusammen mit Steckerstiften einen elektrischen Anschlussstecker. Ein weiteres beheizbares Filterelement mit einer Trägerstruktur und Heizfäden ist aus der US 2010/0181238 A1 bekannt geworden. Der Erfindung liegt die Aufgabe zugrunde, ein Filterelement und einen Heizmantel eines Filterelementes der eingangs genannten Art zu gestalten, bei dem der Heizmantel einfach aufgebaut und realisierbar ist. Ferner soll eine elektrische Verbindung zwischen den Heizleitern und der elektrischen Anschlusseinrichtung vereinfacht werden. Außerdem soll eine Heizeffizienz insbesondere in Bezug auf eine homogene Erwärmung des Fluids entlang des Heizmantels verbessert werden.

### Offenbarung der Erfindung

Diese Aufgabe wird durch ein Filterelement gemäß Anspruch 1 sowie durch einen Heizmantel gemäß Anspruch 8 gelöst.

Dabei ist zumindest ein Teil der elektrischen Anschlussstellen an unterschiedlichen Positionen entlang des länglichen Kontaktelementes angeordnet. Erfindungsgemäß ist also eine Mehrzahl von Heizleitern vorgesehen, welche wenigstens abschnittsweise elektrisch parallel geschaltet sind und mittels dem wenigstens einen Kontaktelement kontaktiert werden. Dies hat, insbesondere wenn ein elektrischer Widerstand der Heizleiter temperaturabhängig ist, den Vorteil, dass die Heizleiter unabhängig voneinander selbstständig geregelt werden können. Auf diese Weise kann eine Homogenität der Erwärmung des Fluids entlang des Heizmantels verbessert werden. Die Heizleiter können vorteilhafterweise wenigstens abschnittsweise zueinander beabstandet sein. Benachbarte Heizleiter können einen gleichmäßigen Abstand zueinander aufweisen. Bevorzugt können sie im Bereich außerhalb des wenigstens einen Kontaktelements zueinander elektrisch isoliert sein. Die elektrische Isolation kann vorteilhafterweise mittels elektrisch isolierender Materialien erfolgen, die zwischen den Heizleitern angeordnet sind.

Vorteilhafterweise können die Heizleiter in Umfangsrichtung bezüglich der Elementachse verlaufen. Die Heizleiter können auch axial bezüglich der Elementachse verlaufen. Die Heizleiter können aber auch schräg zur Umfangsrichtung und Elementachse verlaufen. Als Umfangsrichtung wird die Richtung verstanden, welche umfangsmäßig und senkrecht zur Elementachse verläuft.

Die elektrischen Anschlussstellen sind Abschnitte der Heizleiter, in denen diese elektrisch kontaktiert werden können. Jeder Heizleiter benötigt wenigstens zwei elektrische Anschlussstellen mit denen jeweils ein entsprechender Pol einer Stromquelle zur Versorgung des elektrischen Heizmantels verbunden werden kann. Das wenigstens eine Kontaktelement kann vorteilhafterweise mit allen Heizleitern jeweils mit einer elektrischen Anschlussstelle verbunden sein. So können alle Heizleiter jeweils mit einer elektrischen Anschlussstelle über das wenigstens eine Kontaktelement mit einem entsprechenden Pol der Stromquelle verbunden werden. Das wenigstens eine Kontaktelement kann vorteilhafterweise aus Metall, insbesondere Edelstahl, Kupfer oder Aluminium, sein. Das wenigstens eine Kontaktelement kann vorteilhafterweise mit einem elektrischen Leiter, insbesondere Zinn oder Silber, beschichtet sein. Auf diese Weise kann die elektrische Leitfähigkeit verbessert werden.

Vorteilhafterweise kann der Heizmantel mit den Heizleitern und dem wenigstens einen Kontaktelement einfach vorgefertigt werden. Der vorgefertigte Heizmantel kann einfach mit dem Filtermediumhohlkörper verbunden werden.

Vorteilhafterweise kann der Filtermediumhohlkörper etwa die Form eines Hohlzylinders haben. Der Filtermediumhohlkörper kann in axialer Richtung auch konisch zulaufen. Der Filtermediumhohlkörper kann einen runden, ovalen, eckigen oder andersartigen Querschnitt aufweisen. Vorteilhafterweise kann das Filterelement ein Rundfilterelement oder ein konisch-ovales Rundfilterelement sein. Bei dem Rundfilterelement kann der Filtermediumhohlkörper als runder Hohlzylinder realisiert sein. Das Filtermedium kann vorteilhafterweise sternförmig gefaltet und umfangsmäßig geschlossen sein. Durch die Sternfaltung kann eine hohe Packungsdichte erreicht werden. So kann ein Verhältnis der für die Filtration aktiven Oberfläche zu einem erforderlichen Bauraum verbessert werden. Statt sternförmig gefaltet kann das Filtermedium auch einen in Umfangsrichtung wellenförmigen Verlauf aufweisen. Das Filtermedium kann stattdessen auch ungefaltet und umfangsmäßig geschlossen sein. Vorteilhafterweise kann der Filtermediumhohlkörper von radial außen nach radial innen von Fluid durchströmbar sein. Der Filtermediumhohlkörper kann auch von radial innen nach radial außen durchströmbar sein.

Vorteilhafterweise kann der Heizmantel so angeordnet sein, dass mit ihm das Fluid erwärmt werden kann, bevor es das Filtermedium durchströmt. Auf diese Weise kann eine Fließfähigkeit des Fluids verbessert werden, wodurch ein Druckverlust zwischen der Anströmseite, also einer Rohseite, und einer Abströmseite, also einer Reinseite, des Filtermediums verringert werden kann. Vorteilhafterweise kann der Heizmantel für das Fluid durchlässig sein. Auf diese Weise kann Fluid von radial außen nach radial innen oder umgekehrt durch den Heizmantel strömen. Vorteilhafterweise kann der Heizmantel den Filtermediumhohlkörper wenigstens teilumfänglich umgeben. Bevorzugt kann der Heizmantel den Filtermediumhohlkörper umfangsmäßig geschlossen umgeben. Vorteilhafterweise kann sich der Heizmantel über die gesamte axiale Ausdehnung des Filtermediumhohlkörpers erstrecken. Stattdessen kann sich der Heizmantel vorteilhafterweise wenigstens teilaxial über einen Teil der axialen Ausdehnung des Filtermediumhohlkörpers erstrecken. Der Heizmantel kann an einer Stirnseite in einem axialen Abstand zu der entsprechenden Stirnseite des Filtermediumhohlkörpers enden. Der Heizmantel kann auch an beiden Stirnseiten jeweils in einem axialen Abstand zu den entsprechenden Stirnseiten des Filtermediumhohlkörpers enden. Alternativ kann der Heizmantel auch in einem Innenraum des Filtermediumhohlkörpers angeordnet sein. Eine radial äußere oder radial innere Umfangsfläche des Filtermediumhohlkörpers kann an einer entsprechenden radial inneren oder radial äußeren Umfangsfläche des Heizmantels anliegen. Auf diese Weise kann ein Strömungsweg des Fluids zwischen dem Heizmantel und dem Filtermedium verkürzt werden. So kann eine Abkühlung des Fluids auf dem Strömungsweg zwischen dem Heizmantel und dem Filtermedium verringert, insbesondere verhindert, werden.

Vorteilhafterweise kann das Filterelement an wenigstens einer Stirnseite einen Endkörper, insbesondere eine Endscheibe, aufweisen. Vorteilhafterweise kann der wenigstens eine Endkörper dicht wenigstens mit dem Filtermedium verbunden sein. Auf diese Weise kann eine Fluidströmung durch die Stirnseiten der Falten des Filtermediumhohlkörpers verhindert werden. Ferner kann vorteilhafterweise der Heizmantel mit dem wenigstens einen Endkörper verbunden sein. So kann eine mechanische Stabilität des Filterelements verbessert werden. Außerdem kann vorteilhafterweise die elektrische Anschlusseinrichtung ein elektrisches Anschlusselement, insbesondere einen Anschlussstecker, aufweisen, welches an dem wenigstens einen Endkörper befestigt sein kann und mit dem wenigstens einen elektrischen Kontaktelement elektrisch verbunden sein kann.

Das wenigstens eine Kontaktelement kann vorteilhafterweise mit einem elektrischen Anschluss, insbesondere einer Anschlusslasche, des elektrischen Anschlusselements, der elektrischen Anschlusseinrichtung, insbesondere des Anschlusssteckers, verbunden sein. Der elektrische Anschluss kann an oder in dem wenigstens einen Endkörper des Filterelements angeordnet sein. Der elektrische Anschluss kann vorteilhafterweise in dem wenigstens einen Endkörper eingebettet, insbesondere eingespritzt, sein. Auf diese Weise ist der elektrische Anschluss stabil und geschützt untergebracht. Der elektrische Anschluss kann vorteilhafterweise aus Metall sein. Das wenigstens eine Kontaktelement kann vorteilhafterweise mit dem elektrischen Anschluss insbesondere mittels Löten, Nieten, Schweißen, Klemmen, Krimpen oder Verpressen, elektrisch verbunden sein. Derartige elektrische Verbindungen können sehr stabil und robust ausgestaltet sein. Erfindungsgemäß ist das wenigstens eine längliche Kontaktelement eine Kontaktleiste. Bei einer vorteilhaften Ausführungsform kann das wenigstens eine Kontaktelement im Bereich eines jeweiligen Endes der Heizleiter mit diesem verbunden sein. Auf diese Weise können die Heizleiter jeweils mit einem Ende miteinander elektrisch verbunden werden. Eine Kontaktierung am Ende der Heizleiter kann einfacher ausgestaltet werden als in einem Innenbereich. Ferner kann das wenigstens eine Kontaktelement auch zur mechanischen Stabilisierung und/oder zur Formvorgebung eines Randes des Heizmantels beitragen.

Bei einer weiteren vorteilhaften Ausführungsform kann das wenigstens eine Kontaktelement sich wenigstens mit einer Richtungskomponente axial zur Elementachse erstrecken. Auf diese Weise können die Heizleiter axial verteilt nebeneinander verlaufen und mit dem wenigstens einen Kontaktelement an entsprechenden Anschlussstellen miteinander verbunden werden. Vorteilhafterweise können die Längsseiten des wenigstens einen Kontaktelements in axialer Richtung verlaufen. Dies hat den Vorteil, dass die wenigstens eine Kontaktleiste bei einem zylindrischen Heizmantel gerade verlaufen kann. Auf diese Weise kann der Heizmantel einfach zu einem Hohlzylinder gebogen oder gewickelt werden, ohne dass dabei die wenigstens eine Kontaktleiste stört. Vorteilhafterweise kann sich das Kontaktelement zwischen zwei Endkörpern erstrecken, welche jeweils an den Stirnseiten des Filterelements angeordnet sein können. Das wenigstens eine Kontaktelement kann mit wenigstens einem der Endkörper mechanisch verbunden sein. Auf diese Weise kann der Heizmantel an dem Endkörper gehalten werden. Vorteilhafterweise kann das wenigstens eine Kontaktelement an beiden Endkörpern befestigt sein. Auf diese Weise kann die mechanische Stabilität des Filterelements weiter verbessert werden.

Bei einer alternativen vorteilhaften Ausführungsform kann das wenigstens eine Kontaktelement sich wenigstens mit einer Richtungskomponente umfangsmäßig zur Elementachse erstrecken. Vorteilhafterweise können die Längsseiten des wenigstens einen Kontaktelements in Umfangsrichtung verlaufen. Auf diese Weise können die Heizleiter umfangsmäßig verteilt nebeneinander verlaufen und mit dem wenigstens einen Kontaktelement an entsprechenden Anschlussstellen miteinander verbunden werden. Erfindungsgemäß ist das wenigstens eine Kontaktelement eine Klemmleiste. Die elektrischen Anschlussstellen der Heizleiter können so einfach mittels Klemmen mit dem Kontaktelement elektrisch verbunden werden. Vorteilhafterweise kann die Klemmleiste zwei Schenkel aufweisen, die entlang einer Biegekante zusammengebogen werden können und zwischen denen die elektrischen Anschlussstellen eingeklemmt und somit elektrisch kontaktiert werden können. Die Klemmleiste kann so ausgestaltet sein, dass sie insbesondere materialbedingt nach dem Biegen ihre Form beibehält. Eine derartige Klemmleiste kann einfach realisiert und mit den Heizleitern verbunden werden. Vorteilhafterweise kann die Klemmleiste aus Metall sein. Metall kann einfach gebogen werden. Metall kann nach dem Biegen seine Form beibehalten. Alternativ oder zusätzlich kann die Klemmleiste Fixiermittel, insbesondere Rastelemente, aufweisen, mit denen die Schenkel nach dem Einklemmen der elektrischen Anschlussstellen aneinander fixiert werden können.

Bei einer weiteren vorteilhaften Ausführungsform können zumindest zwei Kontaktelemente vorgesehen sein und die Heizleiter können mit beiden Kontaktelementen elektrisch verbunden sein. Vorteilhafterweise können die Heizleiter jeweils im Bereich eines ihrer beiden Enden mit einem der Kontaktelemente verbunden sein. Vorteilhafterweise können die Kontaktelemente an Seitenrändern des Heizmantels angeordnet sein, die vor dem Biegen oder Wickeln zu dem Hohlzylinder auf gegenüberliegenden Seiten sind. Vorteilhafterweise kann der Heizmantel vor dem Biegen oder Wickeln rechteckig sein. Vorteilhafterweise können die Kontaktelemente nach dem Biegen oder Wickeln, insbesondere nach dem Anordnen am Filtermediumhohlkörper, an einer Umfangsseite des Hohlzylinders nebeneinander angeordnet sein, ohne dass sie direkten elektrischen Kontakt miteinander haben. Vorteilhafterweise können die Kontaktelemente nach dem Biegen oder Wickeln in einem Abstand zueinander angeordnet sein. Alternativ können vorteilhafterweise die Kontaktelemente an den Stirnseiten des zum Hohlzylinder gebogenen oder gewickelten Heizmantels angeordnet sein.

Bei einer weiteren vorteilhaften Ausführungsform können die Heizleiter in oder auf einer Trägerstruktur, insbesondere einer textilen Trägerstruktur, eingebunden sein. Mithilfe der Trägerstruktur kann der Heizmantel mechanisch stabilisiert werden. Ferner kann die Trägerstruktur als elektrische Isolationsmittel wirken, um die Heizleiter elektrisch gegeneinander zu isolieren. Im Übrigen kann die Trägerstruktur zum Positionieren und Halten der Heizleiter dienen. Vorteilhafterweise kann die Trägerstruktur textil verarbeitet, insbesondere gewebt, gestickt, gestrickt oder gewirkt, sein. Die Heizleiter können vorteilhafterweise mit der Trägerstruktur textil verarbeitet sein. Die Trägerstruktur kann vorteilhafterweise elektrisch isolierende Stützfäden aufweisen, mit welchen die Heizleiter textilartig verarbeitet sein können. Vorteilhafterweise können die Heizleiter im Bereich der Anschlussstellen mit der wenigstens einen Kontaktleiste größere Durchmesser aufweisen als die Stützfäden. Auf diese Weise kann vermieden werden, dass die elektrische Verbindung zwischen den Heizleitern und der wenigstens einen Kontaktleiste durch die Stützfäden beeinträchtigt wird. Vorteilhafterweise können die Heizleiter mit ihren Anschlussstellen in einem als Klemmleiste ausgebildeten Kontaktelement eingeklemmt werden, ohne dass die Stützfäden die elektrische Kontaktierung beeinträchtigen. Vorteilhafterweise können die Stützfäden ebenfalls in der Klemmleiste eingeklemmt werden, wodurch die mechanische Stabilität der Verbindung der Heizleiter und der Stützfäden mit der Klemmleiste weiter verbessert werden kann. Die Heizleiter können auch in andersartiger Weise mit der Trägerstruktur verbunden, insbesondere aufgedruckt, sein.

Erfindungsgemäß weisen die Heizleiter elektrisch leitfähige Heizfäden, Heizdrähte und/oder Heizbahnen mit einem, insbesondere temperaturabhängigen, elektrischen Widerstand auf. Heizfäden, Heizdrähte und/oder Heizbahnen können einfach insbesondere textilartig verarbeitet werden. Durch den temperaturabhängigen elektrischen Widerstand kann eine ortsgenaue Heizleistung abhängig von der Fluidtemperatur realisiert werden. Die Heizleistung kann für jeden Heizfaden, jeden Heizdraht und/oder jede Heizbahn selbsttätig gesteuert werden. Vorteilhafterweise kann der elektrische Widerstand einen positiven Temperaturkoeffizienten (PTC) haben. Vorteilhafterweise können die elektrisch leitfähigen Heizfäden, Heizdrähte und/oder Heizbahnen ein superimposed impedance Polymer (SIP) aufweisen.

Die technische Aufgabe wird ferner erfindungsgemäß mit dem Heizmantel gemäß Anspruch 8 gelöst.

Dabei ist zumindest ein Teil der elektrischen Anschlussstellen an unterschiedlichen Positionen entlang des länglichen Kontaktelementes angeordnet. Die im Zusammenhang mit dem erfindungsgemäßen Filterelement aufgezeigten Vorteile und Merkmale gelten für den erfindungsgemäßen Heizmantel entsprechend und umgekehrt. Der Heizmantel kann vorteilhafterweise unabhängig von dem Filterelement vorgefertigt werden. Im vorgefertigten Zustand kann der Heizmantel eben sein. Er kann vorteilhafterweise beim Zusammenbau des Filterelements um den Filtermediumhohlkörper herum gebogen oder gewickelt werden.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: eine isometrische Darstellung eines ersten Ausführungsbeispiels eines Filterelements eines Kraftstofffilters mit einem elektrischen Heizmantel, der umfangsmäßig verlaufende Heizdrähte aufweist, die mittels axial verlaufender Klemmleisten elektrisch kontaktiert sind;
- Figur 2: den ebenen Heizmantel aus der Figur 1 vor der Anbringung an einem Filterbalg des Filterelements;
- Figur 3: eine Seitenansicht einer der Klemmleisten des Heizmantels aus den Figuren 1 und 2;
- Figur 4: einen Schnitt des Heizmantels aus der Figur 2 entlang der dortigen Schnittlinie V-V mit Betrachtungsrichtung auf die Klemmleiste aus der Figur 3 vor dem zusammenbiegen;
- Figur 5: den Schnitt des Heizmantels aus der Figur 4, wobei hier die Klemmleiste zusammengebogen ist;
- Figur 6: eine isometrische Darstellung eines zweiten Ausführungsbeispiels eines Filterelements, welches zu dem Filterelement aus der Figur 1 ähnlich ist, wobei hier statt eines sternförmig gefalteten Filtermediums ein ungefaltetes Filtermedium eingesetzt ist;
- Figur 7: eine isometrische Darstellung eines dritten Ausführungsbeispiels eines Filterelements, welches zu dem Filterelement gemäß dem ersten Ausführungsbeispiel aus der Figur 1 bis 5 ähnlich ist, wobei sich hier der Heizmantel in axialer Richtung nur über einen Teil des Filterelements erstreckt;
- Figur 8: eine isometrische Darstellung eines vierten Ausführungsbeispiels eines Filterelements, welches zu dem Filterelement gemäß dem dritten Ausführungsbeispiel aus der Figur 7 ähnlich ist, wobei hier, analog zu dem zweiten Ausführungsbeispiel aus der Figur 6, statt eines sternförmig gefalteten Filtermediums ein ungefaltetes Filtermedium eingesetzt ist;
- Figur 9: eine isometrische Darstellung eines fünften Ausführungsbeispiels eines Filterelements, welches zu dem Filterelement gemäß dem ersten Ausführungsbeispiel aus der Figur 1 bis 5 ähnlich ist, wobei hier die Heizdrähte sich in axialer Richtung erstrecken, die Klemmleisten umfangsmäßig verlaufen und sich der Heizmantel in axialer Richtung lediglich über einen Teil des Filterelements erstreckt;
- Figur 10: eine isometrische Darstellung eines sechsten Ausführungsbeispiels eines Filterelements, welches zu dem Filterelement gemäß dem fünften Ausführungsbeispiel aus der Figur 9 ähnlich ist, wobei hier, analog zu dem zweiten Ausführungsbeispiel aus der Figur 6 und dem dritten Ausführungsbeispiel aus der Figur 8, statt eines sternförmig gefalteten Filtermediums ein ungefaltetes Filtermedium eingesetzt ist.

In den Figuren sind gleiche Bauteile mit gleichen Bezugszeichen versehen.

### Ausführungsform(en) der Erfindung

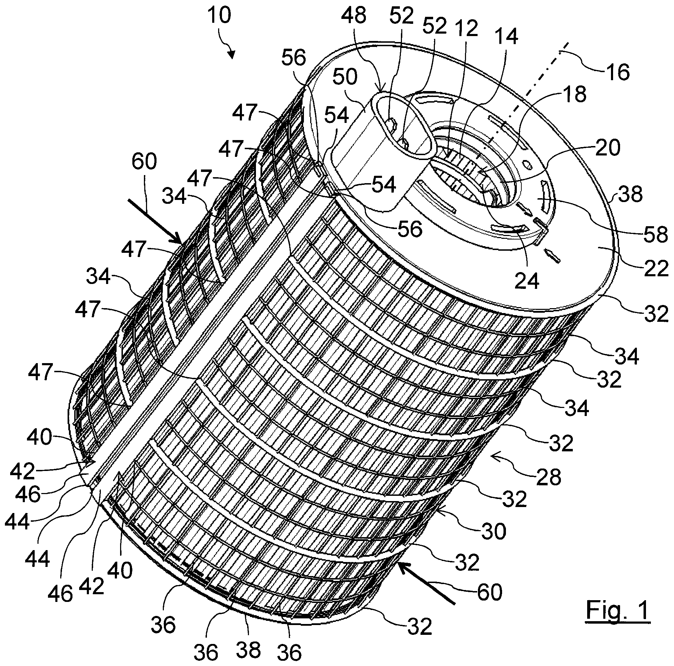

In der Figur 1 ist ein Filterelement 10 eines Kraftstofffilters einer Brennkraftmaschine eines Kraftfahrzeugs gemäß einem ersten Ausführungsbeispiel in einer isometrischen Darstellung gezeigt. Bevorzugt kann der Kraftstofffilter zur Reinigung von flüssigem Kraftstoff, beispielsweise Dieselkraftstoff, in einer Kraftstoffleitung angeordnet werden.

Bei dem Filterelement 10 handelt es sich um ein so genanntes Rundfilterelement, welches eine insgesamt etwa hohlzylindrische Form mit einem runden Querschnitt hat. Das Filterelement 10 ist in einem ansonsten nicht gezeigten Filtergehäuse so angeordnet, dass es einen Einlass des Filtergehäuses für zu filtrierenden Kraftstoff von einem Auslass trennt. Das Filterelement 10 kann austauschbar oder fest in dem Filtergehäuse angeordnet sein.

Das Filterelement 10 umfasst einen Filterbalg 12 aus einem sternförmig gefalteten Filtermedium 14, beispielsweise einem Filtervlies oder einem Filterpapier oder einem anderen zur Filtrierung von Kraftstoff geeigneten Filtermedium. Der Filterbalg 12 hat insgesamt etwa die Form eines hohlen Kreiszylinders, welcher koaxial zu einer gedachten Elementachse 16 ist. Wenn im Folgenden von "radial", "axial" oder "umfangsmäßig" die Rede ist, so bezieht sich dies, sofern nicht anders erwähnt, auf die Elementachse 16.

In einem Innenraum 18 des Filterbalgs 12 ist koaxial ein gerüstartiges Mittelstützrohr 20 angeordnet. Das Mittelstützrohr 20 ist in radialer Richtung durchlässig für den Kraftstoff. An seinen Stirnseiten ist das Mittelstützrohr 20 offen, so dass in axialer Richtung Kraftstoff aus einem Innenraum des Mittelstützrohrs 20 heraus gelangen kann. Eine radial innere Umfangsseite des Filterbalgs 12 liegt an einer radial äußeren Umfangsseite des Mittelstützrohrs 20 an, sodass das Mittelstützrohr 20 den Filterbalg 12 stützt.

An einer Stirnseite des Filterbalgs 12, welche bei eingebautem Filterelement 10 dem Auslass des Filtergehäuses zugewandt ist, in der Figur 1 oben, ist eine runde Anschlussendscheibe 22 angeordnet. Die Anschlussendscheibe 22 ist aus Kunststoff. Die Anschlussendscheibe 22 ist dicht mit dem Filterbalg 12 verklebt. Die Anschlussendscheibe 22 weist eine zentrale Auslassöffnung 24 für den Auslass des gereinigten Kraftstoffs auf.

Die Auslassöffnung 24 ist auf der in axialer Richtung dem Filterbalg 12 gegenüberliegenden Außenseite der Anschlussendscheibe 22 von einer in der Figur 1 verdeckten koaxialen Dichtungsaufnahme für eine Ringdichtung umgeben.

Auf der der Anschlussendscheibe 22 gegenüberliegenden Stirnseite des Filterbalgs 12, in der Figur 1 unten, ist eine in der Figur 1 verdeckte Gegenendscheibe angeordnet, welche ebenfalls dicht mit dem Filterbalg 12 verklebt ist.

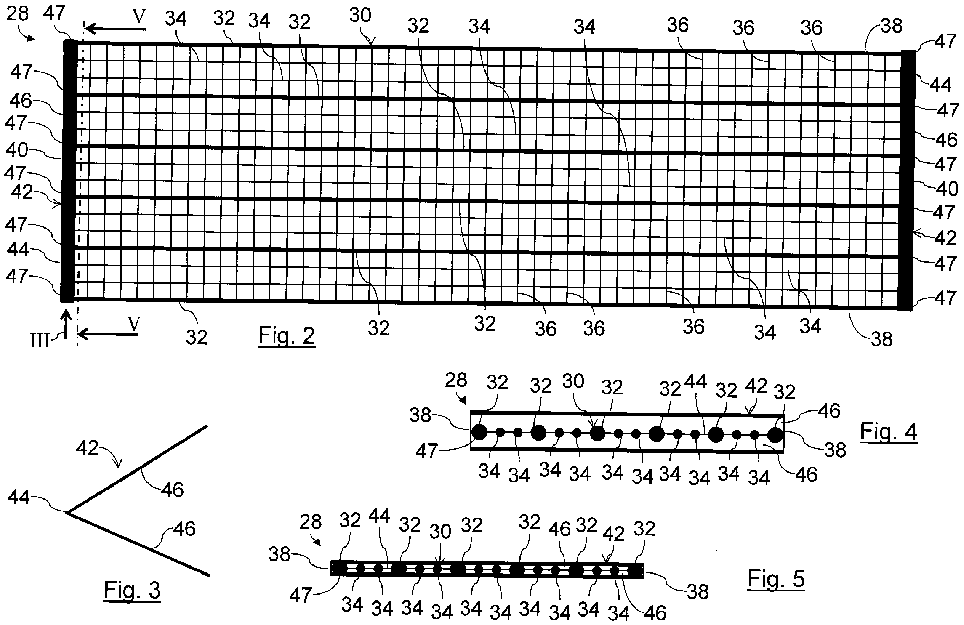

Radial außen ist der Filterbalg 12 von einem elektrisch betriebenen Heizmantel 28 koaxial umgeben. Der Heizmantel 28 ist flächig und in seiner ursprünglichen, nicht gewickelten Form, wie in der Figur 2 gezeigt, rechteckig. Der gewickelte Heizmantel 28, wie er in der Figur 1 gezeigt ist, hat insgesamt die Form eines runden Hohlzylinders. Der gewickelte Heizmantel 28 hat etwa die gleiche axiale Ausdehnung wie der Filterbalg 12, sodass der Filterbalg 12 nahezu vollständig innerhalb des gewickelten Heizmantels 28 angeordnet ist. Der Heizmantel 28 liegt mit seiner radial inneren Umfangsseite an der radial äußeren Umfangsseite, also radial äußeren Faltkanten, des Filterbalgs 12 an. Ein radial äußerer Durchmesser der Anschlussendscheibe 22 entspricht etwa dem Durchmesser des gewickelten Heizmantels 28.

Der Heizmantel 28 umfasst ein Heizgewebe 30 aus elektrisch leitenden Heizfäden 32 und elektrisch isolierenden Stützfäden 34 und 36. Die Heizfäden 32, welche in dem Ausführungsbeispiel insgesamt sechs an der Zahl sind, verlaufen etwa parallel zueinander und parallel zu umfangsmäßigen Stirnseiten 38 des Heizmantels 28 in einem gleichmäßigen Abstand. Die gegenüberliegenden umfangsmäßigen Stirnseiten 38 bilden bei dem gewickelten Heizmantel 28 dessen Stirnränder. Bei gewickelten Heizmantel 28 verlaufen die Heizfäden 32 jeweils in Umfangsrichtung. Zwischen den Heizfäden 32 erstreckt sich eine Mehrzahl von umfangsmäßigen Stützfäden 34, die etwa parallel zu den Heizfäden 32 verlaufen. Die Heizfäden 32 und die umfangsmäßigen Stützfäden 34 sind mit einer Mehrzahl von axialen Stützfäden 36 verwebt, welche sich im Wesentlichen parallel zueinander in axialer Richtung, also senkrecht zu den Stirnseiten 38, erstrecken. Die Stützfäden 34 und 36 dienen als Trägerstruktur für die Heizfäden 32.

An den sich in axialer Richtung erstreckenden Seiten 40 des Heizgewebes 30 ist jeweils eine elektrische Klemmleiste 42 angeordnet. Die Klemmleisten 42 erstrecken sich bei montiertem Heizmantel 28 jeweils in axialer Richtung. Die Klemmleisten 42 sind aus Edelstahl. Sie weisen jeweils eine Biegekante 44 auf, die in der Figur 3 gezeigt ist, um die zwei Schenkel 46 zum Einklemmen der Enden der Heizfäden 32 und der Enden der umfangsmäßigen Stützfäden 36 zusammengebogen werden können. Die Enden der Heizfäden 32 bilden jeweils elektrische Anschlussstellen 47 derselben. Die Anschlussstellen 47 sind an unterschiedlichen Positionen entlang der Klemmleiste 42 angeordnet. Die Heizfäden 32 sind mittels der Klemmleisten 42 elektrisch parallel geschaltet. In der Figur 3 ist eine der Klemmleisten 42 in der Seitenansicht in einer Betrachtungsrichtung auf eine der umfangsmäßigen Stirnseiten 38 des Heizgewebes 30, in der Figur 2 angedeutet durch einen Pfeil III, gezeigt. Die Klemmleiste 42 ist dort in einer Herstellungsphase gezeigt, in der sie noch offen ist. In den Figuren 4 und 5 ist ein Schnitt durch das Heizgewebe 30 mit Betrachtungsrichtung auf die dortige Klemmleiste 42 gezeigt. Figur 4 zeigt die Klemmleiste 42 in einer Herstellungsphase vor dem zusammenbiegen und Figur 5 in einer Herstellungsphase nach dem zusammenbiegen der Schenkel 46.

Ein Durchmesser der Heizfäden 32 ist größer als der Durchmesser der umfangsmäßigen Stützfäden 34. Auf diese Weise behindern die Stützfäden 34 die elektrische Kontaktierung der Klemmleiste 42 mit den Heizfäden 32 nicht.

Die Klemmleisten 42 erstrecken sich über die gesamte axiale Ausdehnung des Heizmantels 28. Auf der der Anschlussendscheibe 22 zugewandten Seite sind die Klemmleisten 42 mit Anschlusslaschen 54 eines Anschlusssteckers 48 verbunden. Der Anschlussstecker 48 ist an der dem Filterbalg 12 abgewandten Außenseite der Anschlussendscheibe 22 angeordnet. Der Anschlussstecker 48 dient zum Anschluss von elektrischen Leitungen zur Versorgung der Heizfäden 32 mit elektrischer Energie.

Der Anschlussstecker 48 verfügt über ein Steckergehäuse 50 aus Kunststoff, in das zwei Kontaktleitungen aus Metall eingebettet sind. Das Steckergehäuse 50 ist einstückig mit der Anschlussendscheibe 22 verbunden. Auf der Anschlussseite des Anschlusssteckers 48 sind die Kontaktleitungen als Kontaktstifte 52 ausgebildet. Die Kontaktstifte 52 gehen in die entsprechenden Anschlusslaschen 54 über, die unten aus dem Steckergehäuse 50 heraus in die Anschlussendscheibe 22 führen. Die Anschlusslaschen 54 sind in die Anschlussendscheibe 22 eingebettet und führen radial nach au-ßen. Die Anschlusslaschen 54 sind an ihren freien Enden jeweils mittels einer Klemmverbindung 56 elektrisch mit den Klemmleisten 42 des Heizmantels 28 verbunden.

Auf der axialen Außenseite der Anschlussendscheibe 22 ist ein ringförmiges Dichtungsfixierelement 58 koaxial auf der Dichtungsaufnahme angeordnet. Das Dichtungsfixierelement 58 fixiert die Ringdichtung in der Dichtungsaufnahme.

Beim Betrieb des Kraftstofffilters durchströmt der Kraftstoff das Filterelement 10 von radial außen nach radial innen, in der Figur 1 angedeutet durch einen Pfeil 60. Beim durchströmen des Heizmantels 28 wird der Kraftstoff mit dem Heizmantel 28 erwärmt, bevor er zu dem Filtermedium 14 gelangt. Der gereinigte Kraftstoff verlässt den Innenraum 18 durch die Auslassöffnung 24.

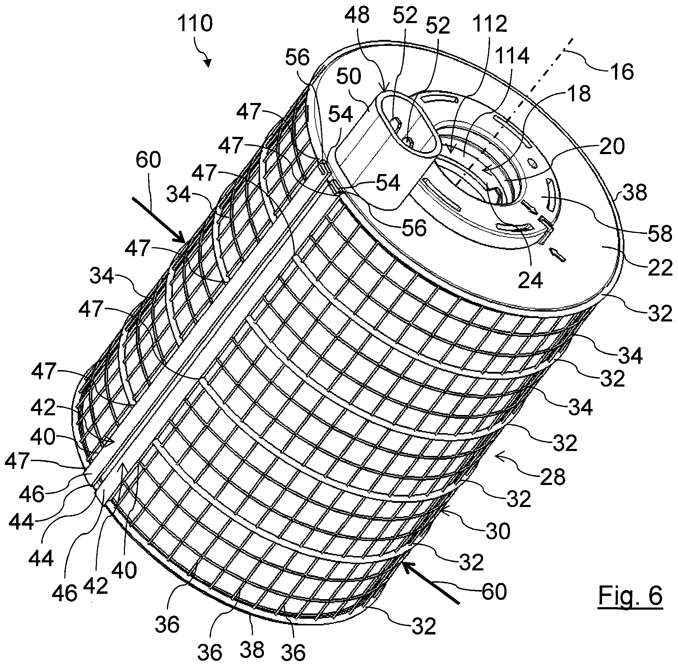

In der Figur 6 ist ein zweites Ausführungsbeispiel eines Filterelements 110 gezeigt. Diejenigen Elemente, die zu denen des ersten Ausführungsbeispiels aus den Figuren 1 bis 5 ähnlich sind, sind mit denselben Bezugszeichen zuzüglich 100 versehen. Im Unterschied zu dem ersten Ausführungsbeispiel ist beim zweiten Ausführungsbeispiel ein Filterbalg 112 aus einem Filtermedium 114 nicht sternförmig gefaltet sondern gewickelt und umfangsmäßig geschlossen. Ansonsten entspricht das Filterelement 110 gemäß dem zweiten Ausführungsbeispiel dem Filterelement 10 gemäß dem ersten Ausführungsbeispiel.

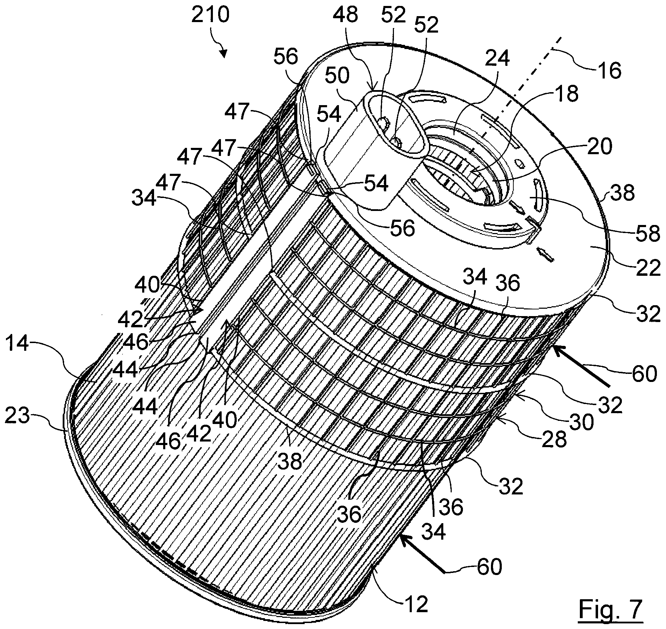

In der Figur 7 ist ein drittes Ausführungsbeispiel eines Filterelements 210 gezeigt. Diejenigen Elemente, die zu denen des ersten Ausführungsbeispiels aus den Figuren 1 bis 5 ähnlich sind, sind mit denselben Bezugszeichen zuzüglich 200 versehen. Im Unterschied zu dem ersten Ausführungsbeispiel aus den Figuren 1 bis 5 erstreckt sich hier der Heizmantel 228 in axialer Richtung lediglich über einen Teil des Filterelements 210.

Die Klemmleisten 42 sind in axialer Richtung entsprechend kürzer. Der Heizmantel 228 hat außerdem lediglich drei Heizfäden 32. Die der Anschlussendscheibe 22 abgewandten Stirnseite 38 befindet sich in einem axialen Abstand zu einer Gegenendscheibe 23. Die Gegenendscheibe 23 ist auf der der Anschlussendscheibe 22 gegenüberliegenden Stirnseite des Filterbalges 12 dicht mit diesem verbunden.

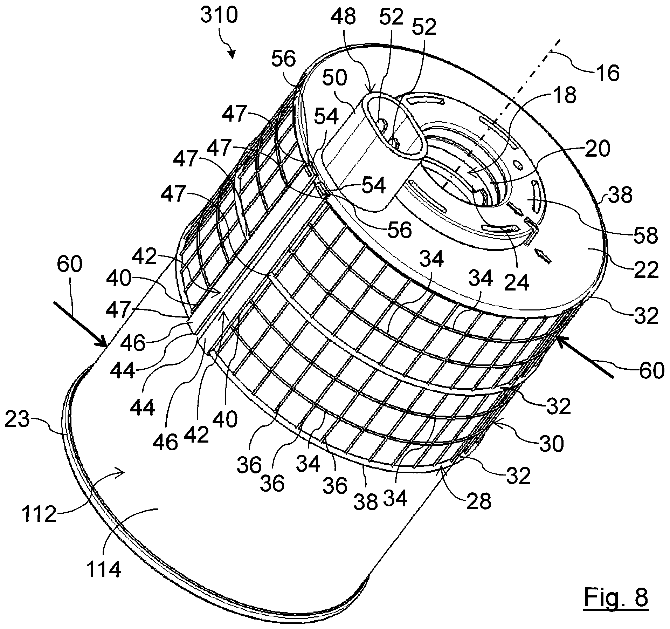

In der Figur 8 ist ein viertes Ausführungsbeispiel eines Filterelements 310 gezeigt. Im Unterschied zu dem dritten Ausführungsbeispiel aus der Figur 7 ist beim vierten Ausführungsbeispiel, analog zum zweiten Ausführungsbeispiel aus der Figur 6, der Filterbalg 112 aus dem Filtermedium 114 nicht sternförmig gefaltet sondern gewickelt und umfangsmäßig geschlossen.

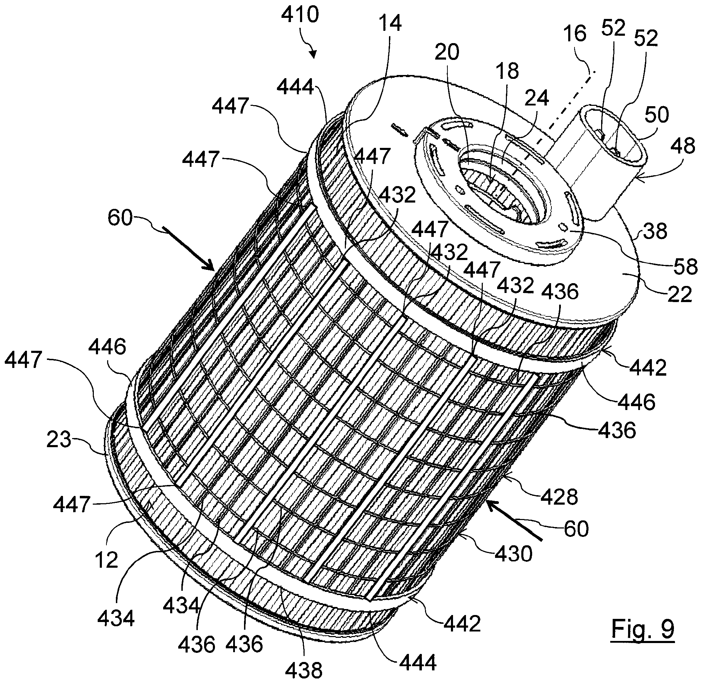

In der Figur 9 ist ein fünftes Ausführungsbeispiel eines Filterelements 410 gezeigt. Diejenigen Elemente, die zu denen des ersten Ausführungsbeispiels aus den Figuren 1 bis 5 ähnlich sind, sind mit denselben Bezugszeichen zuzüglich 400 versehen. Im Unterschied zu dem ersten Ausführungsbeispiel aus den Figuren 1 bis 5 verlaufen beim fünften Ausführungsbeispiel die Heizfäden 432 statt in Umfangsrichtung in axialer Richtung. Die Heizfäden 432 sind in Umfangsrichtung gleichmäßig verteilt nebeneinander angeordnet. Die elektrischen Anschlussstellen 447 der Heizfäden 432 befinden sich entsprechend an den Stirnseiten 438 des Heizmantels 428. Dort sind auch die Klemmleisten 442 angeordnet, welche in Umfangsrichtung entsprechend gebogen sind. Der Heizmantel 428 erstreckt sich in axialer Richtung nur über einen Teil des Filterbalges 12. Die Klemmleisten 442 befinden sich jeweils in einem axialen Abstand zu der Anschlussendscheibe 22 und der Gegenendscheibe 23. Zur Verbindung der Klemmleisten 442 mit den in der Figur 9 verdeckten Anschlusslaschen des Anschlusssteckers 48 sind entsprechende, in der Figur 9 ebenfalls verdeckte elektrische Leitungen vorgesehen. Das Heizgewebe 430 des Heizmantels 428 ist analog zu dem Heizmantel 28 aus den Figuren 2 bis 5 aufgebaut, wobei sich die Heizfäden 432 parallel zu den axialen Seiten 440 des rechteckigen Heizmantels 428 erstrecken und die Klemmleisten 442 an den Stirnseiten 438 angeordnet sind. Entsprechend sind auch mehr als sechs Heizfäden 432 vorgesehen. Die Klemmleisten können sich bei einer alternativen Anordnung statt über den gesamten Umfang auch nur teilumfänglich erstrecken.

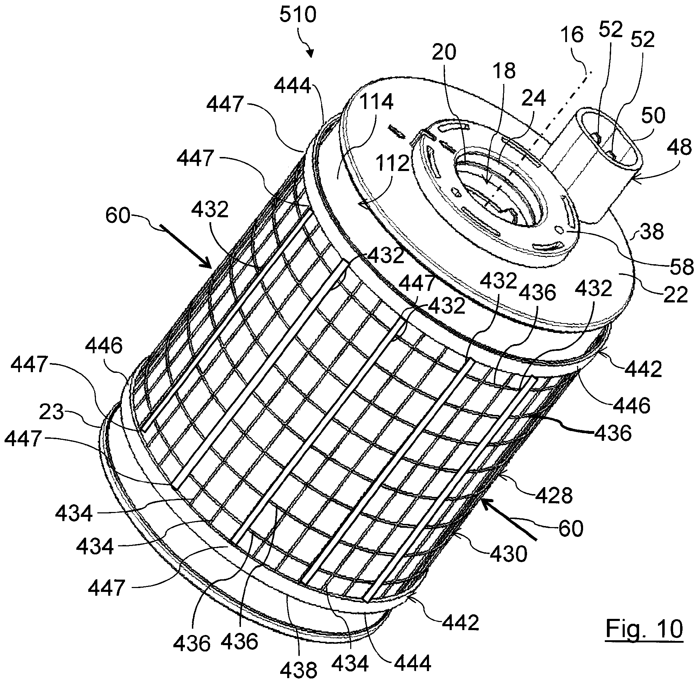

In der Figur 10 ist ein sechstes Ausführungsbeispiel eines Filterelements 510 gezeigt. Im Unterschied zu dem fünften Ausführungsbeispiel aus der Figur 9 ist beim sechsten Ausführungsbeispiel, analog zum zweiten Ausführungsbeispiel aus der Figur 6, der Filterbalg 112 aus dem Filtermedium 114 nicht sternförmig gefaltet sondern gewickelt und umfangsmäßig geschlossen.

Bei allen oben beschriebenen Ausführungsbeispielen eines Filterelements 10; 110; 210; 310; 410; 510 und eines Heizmantels 28; 428 sind unter anderem folgende Modifikationen möglich:
Die Erfindung ist nicht beschränkt auf ein Filterelement 10; 110; 210; 310; 410; 510 eines Kraftstofffilters einer Brennkraftmaschine eines Kraftfahrzeugs. Vielmehr kann sie auch bei andersartigen Filtern für Fluide, beispielsweise für Öl, Wasser, Luft oder Harnstoff, eingesetzt werden. Der Kraftstofffilter kann statt für Dieselkraftstoff auch für andersartige, vorzugsweise flüssige, Kraftstoffe eingesetzt werden. Die Erfindung kann auch außerhalb der Kraftfahrzeugtechnik, beispielsweise bei Industriemotoren, eingesetzt werden. Sie kann auch außerhalb von Brennkraftmaschinen verwendet werden.

Das Filterelement 10; 110; 210; 310; 410; 510 kann statt eines runden Querschnitts auch einen andersartigen, beispielsweise einen ovalen oder etwa eckigen, Querschnitt aufweisen. Das Filterelement 10; 110; 210; 310; 410; 510 kann statt einer zylindrischen auch eine andersartige, beispielsweise konische, Form aufweisen.

Das Filtermedium 14 kann statt sternförmig auch andersartig gefaltet oder gebogen sein.

Die Anschlussendscheibe 22 und/oder die Gegenendscheibe 23 können statt mittels Kleben auch in andersartiger Weise, beispielsweise mittels Schweißen, mit dem Filterbalg 12; 112 verbunden sein.

Anstelle des Heizgewebes 30; 430 kann auch ein andersartiges flächiges, elektrisch betriebenes Heizmedium verwendet werden. Beispielsweise kann das Heizmedium ein andersartiges textilartiges, beispielsweise ein gestricktes, gesticktes oder gewirktes, Medium sein. Alternativ kann das Heizmedium auch eine nicht textilartige Trägerstruktur aus einem elektrisch isolierenden Material, beispielsweise einem Vlies, aufweisen. Die Heizfäden 32; 432 können in die Trägerstruktur eingebunden sein. Alternativ können Heizfäden oder Heizbahnen auf die Trägerstruktur aufgedruckt sein.

Die Anschlusslaschen 54 des Anschlusssteckers 48 können statt mittels Klemmverbindungen 56 auch in anderer Weise, beispielsweise mittels Löten, Nieten, Schweißen, Krimpen oder Verpressen, mit den Klemmleisten 42 elektrisch verbunden sein.

Die Anschlussendscheibe 22 und/oder die Gegenendscheibe 23 und/oder das Mittelstützrohr 20 und/oder das Steckergehäuse 50 und/oder das Dichtungsfixierelement 58 können statt aus Kunststoff auch aus einem andersartigen Material, beispielsweise Metall, sein.

Die Klemmleisten 42; 442 können statt aus Edelstahl auch aus einem andersartigen elektrischen Leiter, vorzugsweise einem Metall, beispielsweise Kupfer oder Aluminium, sein. Sie können auch, beispielsweise mit Zinn oder Silber, beschichtet sein.

Anstelle der Heizfäden 32; 432 können auch Heizdrähte oder Heizbahnen, beispielsweise aus Metall, vorgesehen sein. Alternativ können die Heizfäden 32; 432 auch aus einem elektrisch leitfähigen Material mit einem temperaturabhängigen elektrischen Widerstand sein. Beispielsweise kann der Widerstand einen positiven Temperaturkoeffizienten (PTC) aufweisen. Die Heizfäden 32; 432 können beispielsweise ein so genanntes superimposed impedance Polymer (SIP) aufweisen, welches einen temperaturabhängigen elektrischen Widerstand hat.

Der Anschlussstecker 50 kann auch an der Gegenendscheibe 23 angebracht sein. Der Anschlussstecker 50 kann statt exzentrisch auch zentral, insbesondere konzentrisch, an der Anschlussendscheibe 22 oder der Gegenendscheibe 23 angeordnet sein.

Der Anschlussstecker kann als separates Bauteil ausgeführt sein. Der separate Anschlussstecker kann bevorzugt an der entsprechenden Endscheibe befestigt sein. Zusätzlich oder alternativ kann der Anschlussstecker auch an einem Rahmenteil des Filterelements und/oder des Heizmantels befestigt sein.

## Patentansprüche

1. Filterelement (10; 110; 210; 310; 410; 510) eines Filters für Fluid, insbesondere Kraftstoff, Öl, Wasser, Harnstoff oder Luft, insbesondere einer Brennkraftmaschine, insbesondere eines Kraftfahrzeugs, mit einem als Filtermediumhohlkörper (12; 112) gestalteten, wenigstens bezüglich einer Elementachse (16) umfangsmäßig geschlossenen Filtermedium (14; 114), mit einem elektrischen Heizmantel (28; 428), welcher die Elementachse (16) wenigstens teilumfänglich und wenigstens teilaxial umgibt und der eine Mehrzahl von parallel geschalteten elektrischen Heizleitern (32; 432) aufweist, und mit einer elektrischen Anschlusseinrichtung (42, 48, 50, 52, 54, 56; 442), die elektrisch mit den Heizleitern (32; 432) verbunden ist und die mit elektrischen Leitungen zur Versorgung des elektrischen Heizmantels (28; 428) verbunden werden kann, wobei die elektrischen Heizleiter (32; 432) elektrisch leitfähige Heizfäden (32; 432), Heizdrähte und/oder elektrisch leitfähige Heizbahnen mit einem elektrischen Widerstand aufweisen, **dadurch gekennzeichnet, dass** die Anschlusseinrichtung (42, 48, 50, 52, 54, 56; 442) wenigstens ein längliches elektrisches Kontaktelement aufweist, mit dem wenigstens mehrere der Heizleiter (32; 432) über jeweils wenigstens eine Anschlussstelle (47; 447) wenigstens elektrisch verbunden sind, wobei zumindest ein Teil der elektrischen Anschlussstellen (47; 447) an unterschiedlichen Positionen entlang des länglichen Kontaktelementes (42; 442) angeordnet ist, und dass das wenigstens eine längliche Kontaktelement als Kontaktleiste in Form einer Klemmleiste (42; 442) ausgebildet ist.

2. Filterelement nach Anspruch 1, **dadurch gekennzeichnet, dass** das wenigstens eine Kontaktelement (42; 442) im Bereich eines jeweiligen Endes der Heizleiter (32; 432) mit diesem verbunden ist.

3. Filterelement nach Anspruch 1, **dadurch gekennzeichnet, dass** das wenigstens eine Kontaktelement (42) sich wenigstens mit einer Richtungskomponente axial zur Elementachse (16) erstreckt.

4. Filterelement nach Anspruch 1, **dadurch gekennzeichnet, dass** das wenigstens eine Kontaktelement (442) sich wenigstens mit einer Richtungskomponente umfangsmäßig zur Elementachse (16) erstreckt.

5. Filterelement nach einem der vorigen Ansprüche, **dadurch gekennzeichnet, dass** zumindest zwei Kontaktelemente (42; 442) vorgesehen sind und die Heizleiter (32; 432) mit beiden Kontaktelement (42; 442) elektrisch verbunden sind.

6. Filterelement nach einem der vorigen Ansprüche, **dadurch gekennzeichnet, dass** die Heizleiter (32; 432) in oder auf einer Trägerstruktur, insbesondere einer textilen Trägerstruktur (34, 36; 434, 436), eingebunden sind.

7. Filterelement nach einem der vorigen Ansprüche, **dadurch gekennzeichnet, dass** die Heizleiter einen temperaturabhängigen elektrischen Widerstand aufweisen.

8. Heizmantel (28; 428) eines Filterelements (10; 110; 210; 310; 410; 510) eines Filters für Fluid, insbesondere Kraftstoff, Öl, Wasser, Harnstoff oder Luft, insbesondere einer Brennkraftmaschine, insbesondere eines Kraftfahrzeugs, insbesondere nach einem der vorigen Ansprüche, welcher bezüglich eines als Filtermediumhohlkörper (12; 112) gestalteten, wenigstens bezüglich einer Elementachse (16) umfangsmäßig geschlossenen Filtermediums (14; 114) so angeordnet werden kann, dass er die Elementachse (16) wenigstens teilumfänglich und wenigstens teilaxial umgibt und der eine Mehrzahl von parallel geschalteten elektrischen Heizleitern (32; 432) aufweist, und der wenigstens einen mit den Heizleitern (32; 432) elektrisch verbundenen Teil (42; 442) einer elektrischen Anschlusseinrichtung (42, 48, 50, 52, 54, 56; 442) aufweist, die mit elektrischen Leitungen zur Versorgung des elektrischen Heizmantels (28; 428) verbunden werden kann, wobei die Heizleiter (32; 432) elektrisch leitfähige Heizfäden (32; 432), Heizdrähte und/oder Heizbahnen mit elektrischem Widerstand aufweisen, **dadurch gekennzeichnet, dass** der wenigstens eine Teil der Anschlusseinrichtung (42, 48, 50, 52, 54, 56; 442) wenigstens ein längliches elektrisches Kontaktelement aufweist, mit dem wenigstens mehrere der Heizleiter (32; 432) über jeweils wenigstens eine Anschlussstelle (47; 447) wenigstens elektrisch verbunden sind, wobei zumindest ein Teil der elektrischen Anschlussstellen (47; 447) an unterschiedlichen Positionen entlang des länglichen Kontaktelementes (42; 442) angeordnet ist, und dass das wenigstens eine längliche Kontaktelement als Kontaktleiste in Form einer Klemmleiste (42; 442) ausgebildet ist.

## Claims

1. Filter element (10; 110; 210; 310; 410; 510) of a filter for fluid, in particular fuel, oil, water, urea or air, in particular of a combustion engine, in particular a motor vehicle, with a filter medium (14; 114) which is designed as a filter medium hollow body (12; 112) and closed circumferentially at least with respect to an element axis (16), with an electric heating jacket (28; 428) which surrounds the element axis (16) at least in a partially circumferential manner and at least in a partially axial manner and which has a plurality of parallel-connected electric heating conductors (32; 432), and with an electric connection means (42, 48, 50, 52, 54, 56; 442) which is electrically connected to the heating conductors (32; 432) and which can be connected to electric lines for the supply of the electric heating jacket (28; 428), wherein the electric heating conductors (32; 432) have electrically conductive heating filaments (32; 432), heating wires and/or electrically conductive heating tracks with an electric resistance,
**characterized in that**
the connection means (42, 48, 50, 52, 54, 56; 442) has at least one elongate electric contact element, to which at least several of the heating conductors (32; 432) are at least electrically connected via at least one connection point (47; 447) each, wherein at least a part of the electric connection points (47; 447) is arranged at different positions along the elongate contact element (42; 442),
and **in that** the at least one elongate contact element is designed as a contact strip in the form of a clamping strip (42; 442).

2. Filter element according to claim 1,
**characterized in that**
the at least one contact element (42; 442) is connected in the area of a respective end of the heating conductors (32; 432) to the said end.

3. Filter element according to claim 1,
**characterized in that**
the at least one contact element (42) extends with at least one directional component axially to the element axis (16).

4. Filter element according to claim 1,
**characterized in that**
the at least one contact element (442) extends with at least one directional component circumferentially to the element axis (16).

5. Filter element according to any one of the preceding claims,
**characterized in that**
at least two contact elements (42; 442) are provided and the heating conductors (32; 432) are electrically connected to both contact elements (42; 442).

6. Filter element according to any one of the preceding claims,
**characterized in that**
the heating conductors (32; 432) are incorporated in or on a carrier structure, in particular a textile carrier structure (34, 36; 434, 436).

7. Filter element according to any one of the preceding claims,
**characterized in that**
the heating conductors have a temperature-dependent electric resistance.

8. Heating jacket (28; 428) of a filter element (10; 110; 210; 310; 410; 510) of a filter for fluid, in particular fuel, oil, water, urea or air, in particular of a combustion engine, in particular a motor vehicle, in particular according to any one of the preceding claims, which can be arranged with respect to a filter medium (14; 114) that is designed as a filter medium hollow body (12; 112) and closed circumferentially at least with respect to an element axis (16) in such a manner that it surrounds the element axis (16) at least in a partially circumferential manner and at least in a partially axial manner and has a plurality of parallel-connected electric heating conductors (32; 432), and which has at least one part (42; 442) of an electric connection means (42, 48, 50, 52, 54, 56; 442), which is electrically connected to the heating conductors (32; 432), the said electric connection means being capable of being connected to electric lines for the supply of the electric heating jacket (28; 428), wherein the heating conductors (32; 432) have electrically conductive heating filaments (32; 432), heating wires and/or heating tracks with an electric resistance, **characterized in that**
the at least one part of the connection means (42, 48, 50, 52, 54, 56; 442) has at least one elongate electric contact element, to which at least several of the heating conductors (32; 432) are at least electrically connected via at least one connection point (47; 447) each, wherein at least a part of the electric connection points (47; 447) is arranged at different positions along the elongate contact element (42; 442), and **in that** the at least one elongate contact element is designed as a contact strip in the form of a clamping strip (42; 442).

## Revendications

1. Elément de filtre (10 ; 110 ; 210 ; 310 ; 410 ; 510) d'un filtre pour fluide, en particulier pour carburant, huile, eau, urée ou air, en particulier d'un moteur à combustion interne, en particulier d'un véhicule automobile, comprenant un milieu filtrant (14 ; 114) configuré sous la forme d'un corps creux de milieu filtrant (12 ; 112), fermé en périphérie au moins par rapport à un axe d'élément (16), comprenant une chemise de chauffage (28 ; 428) électrique, qui entoure au moins en partie en périphérie et au moins de manière partiellement axiale l'axe d'élément (16) et qui présente une pluralité de conducteurs de chauffage (32 ; 432) électriques montés en parallèle et comprenant un dispositif de raccordement (42, 48, 50, 52, 54, 56 ; 442) électrique, qui est relié de manière électrique aux conducteurs de chauffage (32 ; 432) et qui peut être relié aux lignes électriques servant à alimenter la chemise de chauffage (28 ; 428) électrique, dans lequel les conducteurs de chauffage (32 ; 432) électriques présentent des filaments (32 ; 432), des fils et/ou des pistes de chauffage électroconducteurs comprenant une résistance électrique, **caractérisé en ce que** le dispositif de raccordement (42, 48, 50, 52, 56 ; 442) présente au moins un élément de contact électrique oblong, auquel au moins plusieurs des conducteurs de chauffage (32 ; 432) sont reliés au moins de manière électrique par l'intermédiaire respectivement d'au moins un point de raccordement (47 ; 447), dans lequel au moins une partie des points de raccordement (47 ; 447) électriques est disposée en des positions différentes le long de l'élément de contact (42 ; 442) oblong, et que l'au moins un élément de contact oblong est réalisé comme une barrette de contact se présentant sous la forme d'une barrette à bornes (42 ; 442).

2. Elément de filtre selon la revendication 1, **caractérisé en ce que** l'au moins un élément de contact (42 ; 442) est relié, dans la zone d'une extrémité respective des conducteurs de chauffage (32 ; 432), à ladite extrémité.

3. Elément de filtre selon la revendication 1, **caractérisé en ce que** l'au moins un élément de contact (42) s'étend de manière axiale par rapport à l'axe d'élément (16) au moins avec une composante directionnelle.

4. Elément de filtre selon la revendication 1, **caractérisé en ce que** l'au moins un élément de contact (442) s'étend en périphérie par rapport à l'axe d'élément (16) au moins avec une composante directionnelle.

5. Elément de filtre selon l'une quelconque des revendications précédentes, **caractérisé en ce qu'**au moins deux éléments de contact (42 ; 442) sont prévus, et les conducteurs de chauffage (32 ; 432) sont reliés de manière électrique aux deux éléments de contact (42 ; 442).

6. Elément de filtre selon l'une quelconque des revendications précédentes, **caractérisé en ce que** les conducteurs de chauffage (32 ; 432) sont intégrés dans ou sur une structure de support, en particulier une structure de support (34, 36 ; 434, 436) textile.

7. Elément de filtre selon l'une quelconque des revendications précédentes, **caractérisé en ce que** les conducteurs de chauffage présentent une résistance électrique dépendant de la température.

8. Chemise de chauffage (28 ; 428) d'un élément de filtre (10 ; 110 ; 210 ; 310 ; 410 ; 510) d'un filtre pour fluide, en particulier pour carburant, huile, eau, urée ou air, en particulier d'un moteur à combustion interne, en particulier d'un véhicule automobile, en particulier selon l'une quelconque des revendications précédentes, qui peut être disposée par rapport à un milieu filtrant (14 ; 114) configuré sous la forme d'un corps creux de milieu filtrant (12; 112), fermé en périphérie au moins par rapport à un axe d'élément (16) de sorte qu'elle entoure au moins en partie en périphérie et au moins de manière partiellement axiale l'axe d'élément (16) et présente une pluralité de conducteurs de chauffage (32 ; 432) électriques montés en parallèle et qui présente au moins une partie (42 ; 442), reliée de manière électrique aux conducteurs de chauffage (32 ; 432), d'un dispositif de raccordement (42, 48, 50, 52, 54, 56 ; 442) électrique, qui peut être relié aux lignes électriques servant à alimenter la chemise de chauffage (28 ; 428) électrique, dans lequel les conducteurs de chauffage (32 ; 432) électriques présentent des filaments (32 ; 432), des fils et/ou des pistes de chauffage électroconducteurs comprenant une résistance électrique, **caractérisée en ce que**
l'au moins une partie du dispositif de raccordement (42, 48, 50, 52, 54, 56 ; 442) présente au moins un élément de contact électrique oblong, auquel au moins plusieurs des conducteurs de chauffage (32 ; 432) sont reliés au moins de manière électrique par l'intermédiaire de respectivement au moins un point de raccordement (47 ; 447), dans laquelle au moins une partie des points de raccordement (47 ; 447) électriques est disposée en des positions différentes le long de l'élément de contact (42 ; 442) oblong, et que l'au moins un élément de contact oblong est réalisé comme une barrette de contact se présentant sous la forme d'une barrette à bornes (42 ; 442).
